# EUROPEAN PATENT SPECIFICATION

(11) **EP 1 540 974 B1**
(45) Date of publication and mention of the grant of the patent: **28.02.2007**
(21) Application number: 03792526.0
(22) Date of filing: 21.08.2003
(51) Int. Cl.: H04Q 7/22

(54) **TELECOMMUNICATIONS SERVICES APPARATUS AND METHOD**
TELEKOMMUNIKATIONSDIENSTEVORRICHTUNG UND VERFAHREN
APPAREIL ET PROCEDE POUR SERVICES DE TELECOMMUNICATION

(30) Priority: 21.08.2002 GB 0219489; 10.09.2002 GB 0220948; 13.09.2002 GB 0221179; 11.10.2002 GB 0223576; 12.10.2002 GB 0223791; 09.11.2002 GB 0226217; 11.11.2002 GB 0226238; 14.11.2002 GB 0226572; 23.12.2002 GB 0229777; 23.12.2002 GB 0229776; 23.12.2002 GB 0229767; 14.01.2003 GB 0300781; 20.01.2003 GB 0301203; 22.01.2003 GB 0301466; 26.03.2003 GB 0306937; 03.04.2003 GB 0307710; 13.05.2003 GB 0310951; 01.07.2003 GB 0315367; 18.07.2003 GB 0316879
(43) Date of publication of application: 15.06.2005
(73) Proprietor: INTELLPROP LIMITED, Guernsey, Channel Islands (GB)
(72) Inventor: WILSON, Jeffrey, Hampshire PO16 70H (GB)
(74) Representative: Pilch, Adam John Michael
(86) International application number: PCT/GB2003/003712
(87) International publication number: WO 2004/019634

(56) References cited:
- WO-A-01/15463
- WO-A-01/22752
- US-A- 6 057 841
- US-A1- 2002 112 014
- US-B1- 6 408 181

## Description

This invention concerns the field of telecommunications and in particular relates to telecommunications services apparatus and methods, specifically in the areas of messaging, connectivity and text processing.

Messaging on mobile networks, and in particular text messaging, has grown significantly since its introduction. It is foreseen that in the future, advanced services will continue to fuel this growth as users find that the mobile terminal becomes increasingly useful for a variety of aspects of lifestyle, communication and information retrieval.

Both voice and text messaging are commonly used by subscribers of mobile telephone networks. Interconnection between many networks has permitted message transmission between subscribers of different networks, and in some cases also between networks of differing technologies, such as GSM and CDMA. Voice messaging commonly uses a mailbox system, whereby a subscriber is allocated a personal mailbox into which other subscribers may record voice messages for later collection by the mailbox owner. Support for the composition, transmission and reception of text messages is present in the majority of GSM mobile terminals.

Text messaging requires alphanumeric entry using the standardised Man Machine Interface (MMI) of the mobile handset, and also requires that the message be addressed to the desired recipient. The destination address for the message may typically be specified either by entering a Mobile Station ISDN number (MSISDN) that is the mobile telephone number of the desired recipient, or by selecting an entry from the handset's address book that already has the desired MSISDN pre-programmed in. The address book normally provides the MSISDN by using alphanumeric look-up of a name.

Users of mobile telephones can have access to a wide variety of voice services, including network-based services such as voicemail and information/entertainment services such as live radio feeds.

Normally, users access these services by originating a call to the service delivery equipment by dialling a string of digits representing the telephone number of the service. Most people have difficulty memorising more than a few telephone numbers and therefore use various forms of directory to provide a translation from meaningful alphanumeric name to digit string. In the case of mobile telephone users, the directory or 'phonebook' contained within the handset is most useful. However if a service is called infrequently the user may not have stored the number, either because of capacity limitations or because future use was not foreseen. Later, when the service is required, obtaining the number from other sources may be difficult, especially if the user is away from home or office. In another branch of communications, the same problem of using long digit strings to identify Internet websites has been very effectively overcome by allowing users to enter alphanumeric addresses (domain names) typically of the form www.companyname.com. Such addresses are translated within the Internet network to the required numeric strings. Furthermore, Internet search engines are available so that when a user cannot remember or does not know the required domain name, an approximation or keyword can be entered to enable intelligent identification of potentially desired websites.

One of the features of the short message service (SMS) in GSM is that an identifier corresponding to the sender's identity is normally transmitted to the recipient. The sender may not optionally withhold it. Exceptions to this include certain specialised services that may be offered by an operator, such as chat or dating whereby an alternative or temporary calling line identity (CLI) is presented to the recipient, permitting reply but obscuring the originator's identity. Apart from such exceptions, the CLI is normally sent and may be displayed in the form of an MSISDN, though most handsets will translate this to an alphanumeric name if there is a corresponding MSISDN entry in the handset's address book. This provides ease of recognition of the sender, without the recipient having to remember telephone numbers. The mobile CLI feature is analogous to the CLI facility available on fixed networks. Another benefit of receiving CLI is that a reply to the message is more easily achieved, without having to explicitly specify the return address. The MMI for mobile handsets in GSM defines Reply as a standard feature.

As an alternative to transmission of the CLI identifier as an MSISDN, the GSM system also supports the transmission of a short alphanumeric value or name of up to 11 characters instead. Support for reception and correct display of an Alphanumeric CLI is almost universally available on recent mobile telephones. This facility is being used increasingly by SMS Hosts to brand the messages that are sent to subscribers. In most cases, telephone numbers associated with SMS Hosts or companies originating brand-related SMS traffic would not be pre-programmed into recipients' handsets. The CLI of such messages would therefore carry no value to the user in promoting or recognising the identity of the message source. By using an alphanumeric CLI (such as 'Coca-Cola' or 'Lufthansa') (RTMs), the user is immediately able to recognise the source, instead of receiving a message from an unrecognised number.

Most handsets support use of the MMI's reply function with messages that have alphanumeric CLIs. The reply function takes the CLI and uses it as the new destination address. Network capabilities to route messages to alphanumeric destination addresses are now being introduced, and the use of alphanumeric addressing is set to grow strongly over time, as users discover the convenience of being able to send messages to names rather than numbers. For example it may be very useful for a motorist to be able to send a text message to the 'AA' or 'RAC' (RTMs) motoring organisation in the event of a breakdown, requesting a call or text reply without having to know a telephone number to call.

Currently, the predominant usage of messaging services on mobile networks is for person-to-person text messaging, which in the case of GSM networks is supported by the Short Message Service (SMS). SMS defines signalling messages within the Mobile Application Protocol (MAP) for transferring the Short Message in Mobile Originated (MO) mode between the Mobile Handset and the Short Message Service Centre (SMSC), and in Mobile Terminated (MT) mode between the Short Message Service Centre and the Mobile Handset. Comparable messaging technologies exist for other mobile network architectures, and next generation messaging systems for GSM (Enhanced Messaging Services EMS, and Multimedia Messaging Services MMS) are being introduced, and collectively these are referred to as text messaging services.

GSM networks are specified in the relevant standards, and these define that the GSM short messaging services (SMS) are implemented by a store and forward device known as a Short Message Service Centre (SMSC.) This technique is analogous to recorded voicemail, and was most beneficial in the early days of GSM, when handsets were less portable than they are today, battery life was poor and radio coverage was limited. At that time only a small proportion of text messages were deliverable at the first attempt, and so a store and forward device was appropriate. Today the converse is true, and many networks report that 80% or more of messages are deliverable on the first attempt.

Other uses of text messaging services include person to Host, and Host to person, where a Host is a network equipment or third party equipment designed to source and/or sink text messages. Hosts typically provide message collection facilities for voting events, competitions or information services and/or message source facilities for subscription services or advertising. It is common at the moment for text messages to be delivered to terminating hosts over IP networks using SMSC based protocols, although some companies such as Telsis (RTM) offer email delivery to hosts over the public Internet. Text message interaction with Host applications, for example for voting, purchases, or entertainment is increasingly common, and interaction with Host applications is beginning to grow in the same way as it has previously on fixed networks in response to the development of premium rate services.

Information services may require a user to send a text message to a specified number or short code, causing the network to direct the message to a particular Host service. The Host then responds to the message with the required information and the reply is transmitted back to the user. Alternatively a subscription service may be invoked, whereby the Host sends a number of information messages over a period of time as requested by the user. Charging for such services is achieved in a number of ways, including premium rate charging for the user request and/or 'reverse' billing of the user for the reply.

Interconnection with the Internet has also been implemented so that text messages may be composed on a web page of a service provider, and then the text message may be sent over a link to a mobile telephone network and subsequently delivered to its destination in the same way as a mobile originated text message. Several of the large Internet content portal companies provide such a service and in many cases, up to a limit, sending text messages to mobiles from such a 'web mail' application on the Internet can be free of charge.

It is also possible in the prior art for the recipient of a text message sent from such a web mail system to reply to the message, even though he has no knowledge of the website, the service provider or the identity of the sender. One way that this has been achieved is to use a Virtual Mobile technique.

Virtual Mobile works by providing a Home Location register (HLR) function for a virtual telephone number, i.e. one that is not necessarily associated with a real physical telephone terminal. The standard routing operations of GSM deliver a call or message to the correct network node by querying the HLR in order to determine the location of a telephone. By arranging for the HLR to respond to queries relating to Virtual Mobile numbers by returning the address of a network node designated for handling Virtual Mobile calls or messages, access to this network node becomes possible from any network. Virtual Mobile allows text messages addressed to host equipment in a network A to be sent from any network.

Virtual Mobile systems to date have been focussed on text connectivity although the technique of voice call re-direction is known. Voice call re-direction allows a normal voice telephone call to be made to a Virtual Mobile number. However the current position of such re-direction techniques is that a voice call is normally redirected to either another telephone for personal answering or, in some cases, is directed to a voice announcement system, which for example may explain the service and prompt the caller to send a text message to the Virtual Mobile number to use the service.

The prior art for allowing replies from a mobile telephone back to an originating web mail user works generally as follows. The Internet Service Provider (ISP) who provides the service for originating text messages from the web already has an association with at least one mobile telephone network in order for the messages to be delivered. By extending this arrangement to include a range of virtual mobile numbers, a reply path can be effected. When the ISP sends a first text message to a given recipient from the web to the mobile network, it allocates for example, the first virtual mobile number in the range to be the source address. If a subsequent text messages from a different sender is sent to the same recipient, then a next virtual mobile number may be used as the source address in order to distinguish the two communications. Messages from the same sender do not need to be distinguished. The web mail system keeps a record of the originator's email address, the virtual mobile number used, and the destination mobile number used in a data store. The text message arrives at the mobile handset of the recipient with a source address (CLI) set to the allocated virtual mobile number. By replying to the message, the handset transposes the source address and destination address, and delivers the reply message to the virtual mobile number. The virtual mobile number allows the reply path to work successfully from any network.

The mobile network determines from the virtual mobile number that the message is destined for the web mail application and directs the message to the web mail subsystem. From the virtual mobile number and the sender's CLI in the data store, the web mail subsystem is able to determine the email address of the original message, and can post the reply to this email address, thereby completing the reply path.

There is little support in mobile telephone networks for any recipient control over text message delivery. Prior art for recipient control in telephone systems includes-
- PBX facilities for diversion, forwarding, do not disturb etc.
- Voice mail that can be selectively switched on or off.
- Dual or multiple SIM card support in some networks, which gives some limited control of to which terminal a message is delivered.

In the prior art, it is known that short message transmission between fixed and mobile networks is possible. The fixed network operator that wishes to enable this functionality must currently install specialised network equipment, and supply suitable terminals, that allow text messages to be transmitted over normal telephone lines to fixed terminals using modem techniques. Alternatively, text messaging to a fixed telephone may be achieved using a text to voice sub-system that allows the message to be delivered as a normal voice call.

It is common for corporate messaging systems to include a facility whereby textual messages may be sent from a company's internal computer local area network (LAN) or Intranet that are then converted to mobile text messaging format and sent over the air to a mobile telephone to be delivered as a text message. In this way messages may be easily sent from any fixed computer terminal attached to the company LAN to any other employee, in the manner of a virtual private network (VPN), or to any mobile phone. Typically the messages are converted to mobile air-interface format by use of a serial connection to a real mobile handset, though other means are possible, such as by means of a host-type connection to an SMSC.

Since the invention of printing, books have been the main source of factual material. Encyclopaedias and textbooks are obvious examples, which provide this type of information. In recent years some of this information has been transferred to electronic media, for example CDs and DVD ROMs, which may be made available on personal computers. The World Wide Web has been another source of information, and the availability of this information has been enhanced by the availability of WAP and mobile browsers using GPRS.

However, information from the web is largely unstructured, and so while desired information might be available somewhere on the web, it is often difficult to quickly find a specific item of information that may be required. Any method that can save time will provide a benefit.

The majority of mobile users have handsets that are technically capable of text messaging. Accordingly it is desirable to provide a facility through which information, which has been conventionally only available in books or accessible from personal computers, is made available to mobile users. Since the majority of handsets are first-generation with no GPRS or WAP capability, the preferred transport for a widely available information facility is text messaging, and in the case of GSM, it is SMS.

**US 2002/ 011 20 14 A** discloses a message routing method for unification of different messaging telecommunication networks. It involves forwarding message to receiver based on routing path information corresponding to receiver's mobile network.

EP-A-1 185 119 describes a textual query and response system known as SMS Wizard that operates over SMS, providing a data-driven intelligent text matching engine capable of answering questions on a wide range of topics.

For an information request, message round-trip transit time from user to Host and then from Host back to user can be typically 20 seconds or more due to the need to transit the network twice. Each transit of the network comprises two parts, a Mobile Originated MO part from the user's terminal to the network, and a Mobile Terminated MT part from the network to the Host equipment. The service therefore normally requires one MO + MT transit for the request and one MO + MT transit for the reply. For many services, this two-transit delay reduces the immediacy of the service, and hence the attractiveness of the interaction to the user.

It is already known in the art that directory services may be offered to subscribers by means of text message responses to enquiries. Normally, the enquiry takes the form of a voice call, with the desired directory number being spoken to the user and/or returned to the user in the body of a text message. Receipt of the number in a text message is useful because it removes the need for the user to record and re-enter the number. The user is able to extract the telephone number from the text message, possibly with the assistance of a handset MMI function, and easily initiate a voice call to this number.

However this service only readily caters for directory entry retrievals for the purpose of making voice calls. If the user, as is increasingly the case, wishes to initiate a text message to a destination for which he does not have a telephone number, then this type of directory service does not always provide a convenient way to use the returned number. Transferring a telephone number from the body of a received text message to the destination address field of a new text message is a difficult operation on many handsets, and users may still have to resort to pencil and paper. Even if a memorable alphanumeric address is returned, the user still has to manually transfer the string correctly into a destination address.

It is not possible in current GSM networks for users to be able to specify an alphanumeric CLI when originating messages from their handsets; this feature is restricted to Hosts. One of the reasons for this is that the mobile originated path between handset and SMSC in GSM is not specified to be able to carry an alphanumeric CLI, whereas the mobile terminated paths from Host to SMSC and SMSC to destination handset use a different message format that does support alphanumeric CLI.

Prior art allows a mobile subscriber to send a text message from a mobile handset and have the message delivered as an email to a specified email address. However the syntax for specifying the email address on the mobile handset is cumbersome and slow, and hence the facility when offered by a network is relatively little used. A further disadvantage of this arrangement is that the user must know in advance the desired destination email address. Although the domain name of many companies can be guessed, the complete email address of a company department that is able to handle messages or queries sent by email is generally not guessable.

An additional complexity of such SMS to email services is that the reply path requires a correlation mechanism. When a message is originated from an email address and delivered to a mobile telephone, it is desirable that the mobile user should be able to reply to the sender using the SMS Reply function of the handset's MMI. To do this the CLI field of the original message delivered to the handset must contain a valid reply address. Since this can be either an MSISDN number or an 11 character alphanumeric string, it is not generally possible to directly store an email address there. Consequently the network must maintain a correlation mechanism. A special CLI value is generated and sent to the mobile handset with the message. The network stores the CLI value and the corresponding sender's email address. When the user replies, the special CLI is used as the destination address. This address causes the text message to be directed to the network's SMS to email gateway, where the corresponding destination email address is looked up and substituted.

Although provided for by the GSM standards, there is no divert (forwarding) facility available for text messages in current networks. Furthermore, there is no translation available to a different medium, such as text to speech or email, that can be specified by the recipient.

SMS Hosts are used for a wide variety of applications including voting, competitions and Interactive TV. By their association with mass media and their appeal to the general public, some SMS applications can generate very high volumes of SMS traffic between users and SMS Hosts. In many cases this has led to overloading of existing SMSC-based infrastructure and a reduction in quality of service for all users. In many cases overload has resulted in large numbers of messages being discarded by some networks even though the senders may have already been charged.

One high growth area for SMS is premium rate services, which in conjunction with SMS Host-based applications are increasingly showing potential to generate significant revenue for operators. Typical examples of premium rate services that attract high levels of traffic are television-stimulated voting and sports results during national and international events. In many ways the growth of this premium rate market for SMS has parallels with the premium rate voice market, which grew and then faded in the late 1980s and early 1990s. In many countries, premium rate voice services were closed down either due to regulator intervention or media pressure, the bad publicity being generated by unscrupulous and fraudulent usage of premium charges by some third-party service providers that were not directly associated with the network operators.

For interconnect between mobile networks and fixed networks, a connection to a mobile operator's SMSC is required. This requires the mobile operator to make changes to his SMSCs in order to allow traffic destined for the fixed network to be passed over an interface to the fixed network. Implementing changes to SMSCs can be difficult and expensive, and the fixed operator needs to interconnect independently with every mobile network.

For mobile to fixed interconnect, the SMS transmission equipment is usually connected to the Short Message Service Centre SMSC using a proprietary protocol. This architecture leads to a usability problem with SMS transmission between mobile networks and fixed networks because the SMSC to which the SMS transmission equipment is attached will normally only be able to receive messages from subscribers of the mobile network that hosted the SMSC. However it is usually possible for fixed network subscribers to send short messages to any mobile network. The inability to transmit messages between any mobile network and the fixed network is both a problem for users and also a lost revenue opportunity for mobile and fixed operators. Furthermore the availability of such a messaging service to a subscriber of a fixed telephone network is conditional on them obtaining a suitably capable telephone terminal, adapted for the purpose of receiving and transmitting text messages on the fixed network. It is not therefore generally possible for the mobile subscriber to reach a significant proportion of fixed network subscribers using text messaging, because the fixed network user may not have a suitable terminal. Given suitable investment by the network operator, this could be overcome by using text to speech techniques, and delivering the message in a normal voice call. It is also possible for fixed network users to initiate text messages from a standard telephone terminal by using techniques such as that known as Touch text, as described in GB-A-2 317 982.

One of the main barriers to growth in communication between individuals and organisations using current mobile messaging techniques is that the user must first know the telephone number or email address of the organisation concerned. In general this may be difficult to achieve for the mobile user, possibly requiring the cumbersome and expensive use of a directory service first.

A further shortcoming of current SMS addressing means is that it is not generally possible to call someone's mobile telephone number if the number is not known, even though the company name and extension number may be known. VPN services allow this but only if the caller belongs to the same closed user group. People within the same company VPN may call each other using short numbers, but outsiders cannot make use of this facility.

Some attempts to overcome the lack of support for alphanumeric addressing have been made with personal numbers and particularly Freephone numbers. For example, generic identifiers in the UK such as 0800 FLOWERS are used to route calls to a specific florist, or (with Intelligent Network number translation facilities) to the florist nearest the caller. Specific identifiers, such as 0800 TELSIS, can be dialled to reach a particular company or organisation.

In such cases, the organisation 'owning' the alphanumeric address has in fact 'bought' a telephone number where the digits correspond to the letters usually printed on a telephone keypad. Thus 0800 TELSIS is actually 0800 835747. A drawback of this approach is that, because each of the digit keys represents several letters, other organisations may not be able to use the same scheme - for example 0800 VEKRIS is also 0800 835747. Thus utilisation of the significantly increased address space offered by alphanumeric addressing is severely limited.

Other drawbacks of the '0800 TELSIS' approach include the fact that a number of different layouts for letters on telephone keypads are in use throughout the world. Whilst the situation has been eased in recent times with the introduction of an ISO standard, organisations may still have to promote both alpha and numeric telephone numbers, e.g. '0800 TELSIS (835747)'.

In addition, callers who are not in the 'home' country have difficulty in accessing such numbers. For example, somebody in the Netherlands wishing to call Telsis in the UK would normally have to dial the international access code, followed by the country code and then the UK telephone number (without the leading zero), i.e. 0044 800 TELSIS. This means that the caller would have to know where the company is located and the appropriate country code and number format. Even if these are known, access is unlikely to be permitted because 0800 is a Freephone code and, even where networks allow it, the organisation may not wish to accept the charges resulting from international calls.

An attempt to overcome these difficulties and restrictions has been made through introduction of the Universal Freephone service in which a logical country code of 800 has been allocated. Thus dialling 00 800 00 TELSIS could allow access to Telsis from any country supporting the Universal Freephone service, but in practice the organisation has to arrange for the particular Universal Freephone number to be activated in every country from which it is prepared to accept calls. The points made above regarding name/number clashes (TELSIS/VEKRIS) and inefficient use of the potential address space are still valid for Universal Freephone, and in addition the caller must remember the exact number format, i.e. 00 800 00... in this case. As can be seen, numeric numbering schemes within the world's telecoms networks are inherently restrictive, resulting in an impaired service to users and reduced network revenues.

As discussed above, it is possible to use alphanumeric representations of telephone numbers but with significant limitations.

Another common limitation exists in connection with services that are normally reached by dialling a short code when connected to the home network. Such services may include voicemail, customer services, and information/entertainment services. Current limitations of mobile networks with respect to international call handling mean that, in the majority of cases, calls to a short code may not be handled in the same way when roaming. Furthermore, current limitations of international call handling mean that the caller's CLI is often not delivered to a destination. This can restrict access to certain services and destinations.

In the context of text messaging from a corporate LAN to a mobile phone, 'On net' employees (who belong to the VPN) would find it useful to be able to reply to such text messages using the normal reply function of their handset's MMI, and to have the reply directed back to the originating computer terminal, or an associated mail account, on the company's LAN. However it is not generally possible for the mobile telephone user to either originate text messages that are deliverable to a corporate LAN, or to reply messages from such a corporate LAN. This is because the addressing capabilities of mobile text messaging are designed around an ISDN numbering plan, whilst user identities within a corporate LAN environment are typically short codes that are only unique within the company.

The current extensive use of text messaging for communication gives rise to a need for associated services that allow text message communication to provide some additional features that are taken for granted with other forms of communication. For example voice communication can support call recording and written communication allows photocopying, while text messaging has very little support for any form of copying or archiving, and none that is easy to use.

Although the prior art provides for text messages and replies to be sent between a web mail account and a mobile telephone, the prior art system described earlier has no support for voice reply from the mobile, even though the mobile user may reasonably expect to be able to utilise the originating mobile number to make a voice call. Any attempt to do this in the prior art system will result in a failed voice call. Normally when a mobile user receives a mobile originated text message, he has a number of options for reply. He can send a reply text, he can save the originating number for later use, or he can use the originating number to make a voice call and hence either talk to the sender, or leave a message in voice mail. From the point of view of the mobile user who has just received a text message that happens to be from a web mail sender, he would expect to have the same options. However, were he to try to make a voice call to the sender's number, which is a virtual mobile number, he would find that the call would not be connected, or would result in announcement indicating that the number cannot be used for voice calls.

A limitation of the text-processing engine described in EP-A-1 185 119 is that it relies on exact pattern matching, and is therefore inflexible in the formatting and sentence construction that it will recognise in the user's query. There is no programmability in the way the engine performs its matching algorithms.

A major limitation of traditional SMS architectures involving only store and forward delivery of SMS, as originally envisaged in the GSM specifications, is that the message store element is in the sender's network not the receiver's. There are thousands of SMSCs in the many networks world wide, and while a handset is unavailable there may be a message waiting in any one of them. Therefore this architecture is inappropriate for doing anything intelligent with a waiting message other than continuing to wait. Furthermore, when a recipient is roaming, a message sent to him from any network other than his home network does not even pass through his home network.

According to a first aspect of the invention there is provided a telecommunications services apparatus for use with a telephone network, the apparatus comprising:
means operable to support execution of one or more messaging applications, wherein an application may be executed for each of any or all messages that arrive at the apparatus;
means for storing message attributes matched to respective messaging applications;
means for comparing, for each message, an attribute of that message with the stored message attributes, and operable thereby to select the respective messaging application on the basis of the comparison; and
means for executing the selected messaging application, execution of the selected application including processing, transforming and/or routing the respective message.

According to a second aspect of the invention there is provided a telecommunications services method for a telephone network, the method comprising:
supporting execution of one or more messaging applications, wherein an application may be executed for each of any or all input messages;
storing message attributes matched to respective messaging applications;
comparing, for each message, an attribute of that message with the stored message attributes, and thereby selecting the respective messaging application on the basis of the comparison; and
executing the selected messaging application, execution of the selected application including processing, transforming and/or routing the respective message.

The telecommunications services apparatus preferably comprises one or more SMS routers, and optionally an SMS service control point (SCP). Service logic may operate independently on the SMS routers or in conjunction with centralised intelligence in the SMS SCP.

The preferred apparatus further supports operation in conjunction with a message transformation means that may be known as an SMS Wizard (see EP-A-1 185 119), which can parse, interpret and transform message content and addressing in order to generate a response message according to programmable tables of exceptions, which response may be routed either via the SMS router or via an alternative route such as over a data network. In the event of failure to match the input to programmed exceptions, the query may be optionally passed to an external system or agent for response.

According to a third aspect of the invention there is provided a telecommunications services apparatus for use with a telephone network, the apparatus comprising:
a message transformation means operable to parse, interpret and transform message content and addressing in order to generate a response message according to programmable tables of rules known as exceptions, wherein the exceptions conform to a syntax that permits matching of a single exception to multiple forms of message construction.

According to a fourth aspect of the invention there is provided a telecommunications services apparatus for use with a telephone network, the apparatus comprising:
a message transformation means operable to parse, interpret and transform message content and addressing in an input message in order to generate a response message according to programmable tables of exceptions and rules, wherein the exceptions and
rules conform to a syntax that permits matching of a single exception to multiple forms of input message constructions, wherein syntactic elements of the exception or rule may appear in a different order from the respective matching elements in the input message.

According to a fifth aspect of the invention, there is provided a telecommunications services apparatus for use with a telephone network, the apparatus comprising:
a message transformation means operable to return a response message back to the original sender without requiring a routing query to a home location register (HLR), the response addressing and routing information being derived from the original message.

The routing query to the HLR may be an SRI-SM MAP message, and the routing information obtained from the original message may be an international mobile subscriber identifier (IMSI) and a visitor location register (VLR) address corresponding to the sender's location.

According to a sixth aspect of the invention there is provided a telecommunications services method for a telephone network, the method comprising:
a message transformation step operable to parse, interpret and transform message content and addressing in order to generate a response message according to programmable tables of rules known as exceptions, wherein the exceptions conform to a syntax that permits matching of a single exception to multiple forms of message construction.

According to a seventh aspect of the invention there is provided a telecommunications services method for a telephone network, the method comprising:
a message transformation step operable to parse, interpret and transform message content and addressing in an input message in order to generate a response message according to programmable tables of exceptions and rules, wherein the exceptions and
rules conform to a syntax that permits matching of a single exception to multiple forms of input message constructions, wherein syntactic elements of the exception or rule may appear in a different order from the respective matching elements in the input message.

According to an eighth aspect of the invention there is provided a telecommunications services method for a telephone network, the method comprising:
a message transformation step operable to return a response message back to the original sender without requiring a routing query to a home location register (HLR), the response addressing and routing information being derived from the original message.

Further aspects of the invention provide a computer program for carrying out the above method(s), and a storage medium on which such computer program is stored.

The invention will now be described by way of example with reference to the accompanying drawings, throughout which like parts are referred to by like references, and in which:
Figure 1 is a system block diagram of a telecommunications services apparatus according to an embodiment of the invention;
Figure 2 is a block diagram showing SMS grooming in the apparatus of Figure 1;
Figure 3 is a block diagram showing access to a textual information service in the apparatus of Figure 1;
Figure 4 shows elements involved in the development of a project to be implemented by the service in Figure 3; and
Figure 5 is a block diagram showing the manner in which messages are received from an SMS router in a live system.

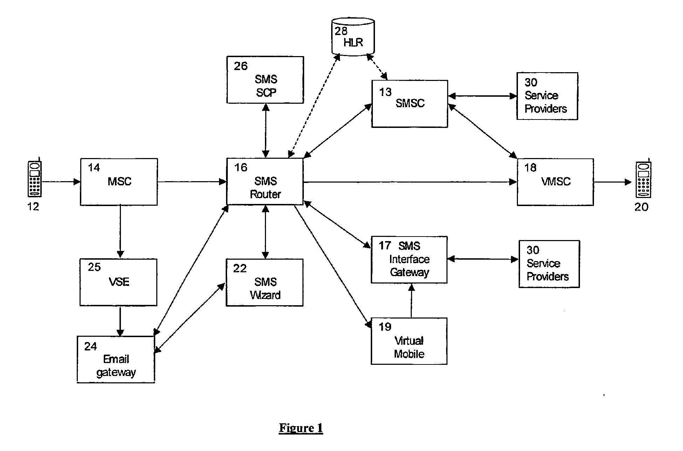

Referring to Figure 1, a subscriber's mobile terminal 12 is shown communicating via a mobile switching centre (MSC) 14 with an SMS router 16 (the system may include more than one SMS router). The SMS router 16 communicates with a short message service centre (SMSC) 13 and, via a visited mobile switching centre (VMSC) 18, with a destination mobile terminal 20. The SMS router 16 also communicates with a virtual mobile equipment 19 and, via an SMS interface gateway 17, with service providers 30. An SMS Wizard 22 communicates with the SMS router 16 and with an email gateway 24. A voice services equipment (VSE) 25 is interposed between the MSC 14 and the email gateway 24. Further communicating with the SMS router 16 is an SMS service control point (SCP) 26, and a home location register (HLR) 28 which also communicates with the SMSC 13.

As shown in Figure 1, the SMS router(s) 16 is/are placed in the path of mobile originated messages from the subscriber's terminal 12 communicating with the MSC 14. In an implementation, the router 16 is typically connected to a signalling transfer point (STP) in the network, and is in-line in the sense that messages pass through it and back to the same or another STP; however this level of detail is network specific and beyond the scope of this diagram. After any processing, the SMS router 16 may query the HLR 28 to obtain delivery routing and then the messages may be onward delivered either directly via the VMSC 18 of the destination mobile terminal 20, or indirectly via a store and forward mechanism such as the SMSC 13. Alternatively the router 16 may interact with the SMS Wizard 22 or the email gateway 24 instead or as well as delivering the message. Traffic destined for service providers 30 may be groomed via the SMS interface gateway 17 or via the SMSC 13. The virtual mobile equipment 19 permits traffic destined for applications or service providers to be originated from any network. Voice calls to virtual mobile numbers may be directed by the HLR function within the virtual mobile equipment 19 to be delivered to the voice services equipment 25, which for example may transcode a voice message and deliver it via the email gateway 24.

The SMS router(s) 16 may, for example, be a Telsis (RTM) SMS Router, manufactured by Telsis Limited. This equipment is capable of connection to mobile telephone networks using standardised signalling protocols including SS7 and TCP/IP.

The system shown in Figure 1 can provide an SMS network capable of supporting a number of applications, described below, this being known as the Future SMS Architecture.

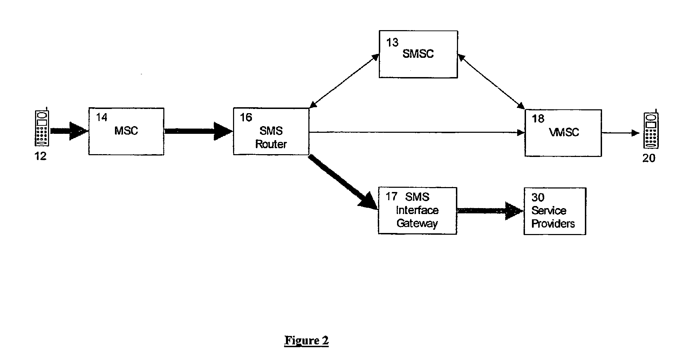

Figure 2 shows an example of SMS grooming using the system of Figure 1.

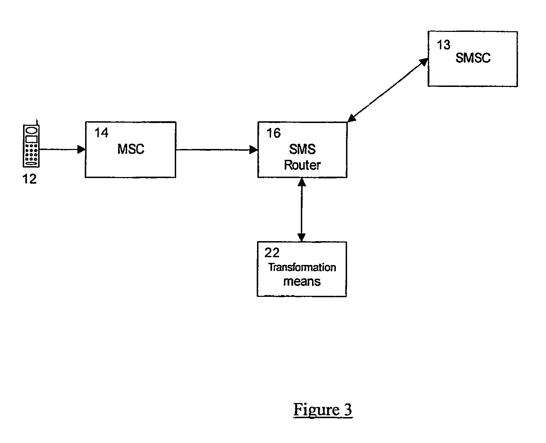

Figure 3 shows access to a textual information service, with the reply being sent back to the originator, again using the system of Figure 1.

Since around 80% of text messages are typically deliverable immediately, networks are turning to techniques for message handling that avoid the delays and cost involved in sending all messages via a store and forward mechanism in an SMSC. Improved efficiency can be gained by the use of SMS routers in the network that allow each message to be selectively processed and/or delivered by an appropriate method according to the characteristics of the message. Person-to-person traffic may be directly delivered to the recipient, and only if the recipient is unreachable is the message then passed on to a store-and-forward device. SMS routers may implement throttling, load balancing, address translation and other facilities within the network to improve the efficiency or scope of services offered to subscribers.

Some value-added text messaging services may require a user to send a text message to a specified number or short code, causing the network to process the message according to the service specified by the number. This might be, for example, to modify the message in some way, possibly transforming certain aspects of its addressing or content, before onward delivering it to its destination. Alternatively for some applications the network may direct the transformed message back to the originating user.

Successful standardisation has permitted the global spread of mobile telecommunication networks. Handsets are manufactured that can be used in many networks in many countries. However, the standardisation process also slows down the introduction of new features in networks, and facilities available to users today are to a large extent constrained by the scope of the designs envisaged by those who formed the standards several years previously. Consequently some services or network facilities that are desirable today, are not immediately available because their use was not previously envisioned during standardisation. Nevertheless it is still possible to introduce new services provided an architecture is adopted that not only makes use of the richness and flexibility of those features that are available, but also allows innovation either by using existing services in new or specific ways or by providing new or alternative behaviour.

The characteristics of text messages and voice messages are different and each is suited to its own types of communication. A change in users' behaviour has occurred whereby mobile phone users will typically choose to either call or text to a mobile telephone number depending not only on the message but also on their personality, mood and the circumstances of the moment.

Recognising that voice and text communication are each more suited to differing circumstances, a potential sender may therefore be more likely to send a message if both means are always available since he can at any time choose the more appropriate means of communication. Furthermore, offering both methods on the same number makes the situation simpler for the user and reduces barriers to communication.

Taking these and other factors into consideration, the present technique proposes an improved architecture for SMS processing in a mobile telephone network, that is suited not only to the basic needs of efficient person-to-person message transmission, but can also support the many and varied, and even the yet to be thought of, applications for which SMS networks can be used.

Such applications may include-
- High volume voting or other participation in media events
- Direct delivery to minimise delay and make efficient use of store and forward facilities
- Grooming to separate special traffic onto another network at the earliest point
- Alphanumeric addressing, both in destination address and in CLI fields
- Information access, using intelligent text processing agents
- Fixed network and cross network access
- SMS forwarding, copying and archiving
- Translation to other media such as email or speech
- High volume host originated traffic

The Future SMS Architecture, as shown in Figure 1, may provide an SMS network that is capable of supporting all of these applications and more.

The Future SMS architecture provides a flexible and powerful base on which to build revenue-generating business based on value added services, while also providing infrastructure capabilities such as load sharing, network protection, traffic grooming and direct delivery which provide both direct and indirect benefits to network users.

A key feature of the Future SMS Architecture is that multiple applications are supported by its core component, the SMS router, in such a way that by matching attributes of an incoming text message against its programmable decision tables, the application to run may be decided on a message by message basis. In this way the SMS router is able to support the Future SMS Architecture in offering a range of applications simultaneously, while providing future upgrade capability to support additional applications by means of configuration and/or software upgrade.

The decision tables are organised hierarchically so that the attributes of an incoming message are sequentially matched against decision criteria. Once the first complete match is found, the matching process terminates and the respective application and parameters are launched. The matching supports wildcarding and number ranges to allow flexible matching in a minimum number of rules. Matching tables are provided on a per trunk-group basis where a trunk group may be configured to contain from zero to the total number of SS7 signalling trunks on the router. Once an application has been started, the matching process can optionally be re-invoked if required by the application to using match rules from a 'virtual' trunk group to match further attributes for deciding processing, routing flow or the like. The matching process and the application can make use of destination and origination addresses and type, various signalling fields and also the message content, in deciding the processing and routing to be carried out for each message.

Detailed operation of the technique is now described by means of example applications of the invention.

One of the key aspects supported by the Future SMS Architecture is known as SMS grooming, that is the selective routing of certain types of traffic away from the main SS7-based SMS network that is used for person-to-person messaging and onto a separate network, for example a TCP/IP or other data network, typically for delivery to Hosts, applications or service providers. This is illustrated in Figure 2. The heavier arrows indicate a higher bandwidth message path, necessary for grooming peak traffic loads such as televotes or media competitions; such traffic is unsuited to being passed through an SMSC where it may disrupt person-to-person traffic, and require unnecessarily high levels of licensed throughput, at a correspondingly high cost.

The grooming operation is performed by the SMS router 16, which may be implemented as one or a cluster of units, and which may be geographically dispersed. The SMS router 16 examines each MO message (either arriving directly from an MSC in this network, such as the MSC 14, groomed as MO by an SMS router in another network, or arriving as an MT message from another network using the virtual mobile technique) and decides on the basis of addressing information and/or content that the message is destined for a particular SMS application or Host. The SMS Host may be associated with this network, or may be associated with a competing network but be reachable over an interconnect. These messages are groomed off from the normal traffic and transmitted directly towards the SMS Hosts. The interface to the SMS Hosts may be MAP over SS7, SMPP over TCP/IP or other transport means.

This model supports free-text, premium text, voting and other high volume applications, allowing the network to generate revenue by responding quickly to market demands.

With a grooming solution, network operators retain control of premium charging, whereas with reverse billing the responsibility for fair and reasonable usage falls to the service providers. Maximum benefit from grooming is obtained when all networks in a national or geographic area groom, and there is no throughput restriction. SMS Hosts may have a connection to each operator in a geographic area, or alternatively the operators in that area may support interconnects so that an SMS Host may be reached directly from other local networks.

A high bandwidth path in the SS7 domain is required only as far as the SMS router(s), after which the messages may be groomed to another network such as a TCP/IP data network, permitting high throughput to be readily achieved from the subscriber to the service provider. Only this architecture allows the network operator to provide service level guarantees to multiple service providers, without massive over-provisioning of SS7 and SMSC capacity.

Generally, the available bandwidth in a network is large at the radio interface, where many users are distributed across many base stations. The bandwidth of the communication channel then decreases steadily through the links to the MSCs, the links to the SMSCs, the SMSCs themselves and finally through the links to the service providers, which can typically only handle a few tens or hundreds of messages per second. The general lack of bandwidth at service providers means that for large voting events the optimal architecture is for the traffic to be groomed and terminated within the network where the available bandwidth is high. Preferably a multi-level management model is used that allows a high degree of control over the set-up and management of voting events by service providers, thus reducing network operator involvement.

A further example is operable to implement direct delivery, whereby the SMS router 16 attempts message delivery one or more times, only passing the message to a store and forward function in the SMSC 13 if the attempted direct delivery is unsuccessful. Many networks are now experiencing first time delivery success rates exceeding 80%, which indicates that store and forward is not appropriate for every message. Direct delivery allows operators to release capacity in their legacy SMSCs by delivering most messages directly from the SMS routers. With only 20% of traffic requiring SMSC storage, operators remove any capacity limitations they may have in their SMSCs and obtain free capacity for continued growth, while at the same time making message delivery cheaper, faster and more efficient.

The SMS router(s) 16 of the Future SMS Architecture can also provide network protection. With centralised control from the SMS SCP 26, accurate throttling limits can be set on the traffic rates sent to each and every SMSC or Host, preventing overload. Without centralised control, only an approximation to a desired throttling level can be achieved, dependent on traffic statistics.

A further example is operable in conjunction with the technique widely known in the art as virtual mobile. This permits a number, or range of numbers, belonging to a network (say Network A) to be used as addresses for Host equipment or application within network A. There need be no mobile telephone associated with each of these numbers.

The virtual mobile equipment 19 in the preferred embodiment may be implemented on one or more SMS routers in network A. Using techniques known in the art, the virtual mobile equipment 19 may be arranged to contain the HLR function for the virtual mobile numbers to be used, may implement a location update technique using an HLR function in the same network or another network B, or may implement an HLR function for specific number ranges such as service numbers. If it is desired to implement the technique in network A solely with virtual numbers belonging to network A, then either technique may be used. If it is intended to operate the virtual mobile equipment in network A on behalf of network B using virtual numbers from B's number range, then the location update method must be used.

In the following example, the location update method is used, allowing the virtual numbers used to belong to any network, including network A, though in the example they are assumed to belong to network B so that the example has the most general applicability, namely network A and network B may be the same network, or different networks.

In order to implement the example, the virtual mobile equipment is configured so that for selected virtual numbers or number ranges belonging to network B, periodic location update messages are generated by the virtual mobile equipment in network A. These cause the location of these virtual numbers as recorded by network B's HLR to be the SMS router(s) that form part of the virtual mobile equipment in network A. Messages directed to these virtual numbers will then ultimately be routed to the identified equipment in network A. Network A can then implement virtual mobile services on behalf of network B with no changes to B's network. It is merely necessary for network B to allocate suitable numbers or number ranges and to provision them onto its HLR(s) in the usual way as for new mobile phones, such that location update messages will be accepted in the normal way.

When a mobile subscriber sends a text message to one of the virtual mobile numbers associated with network B, his SMSC sends an SRI-SM query that is routed by GSM networks to network B's HLR. The response to this query directs the sending network to deliver the message to the virtual mobile equipment 19 in network A. This may then determine that the virtual mobile number used is associated with network B, since a network B IMSI is present in the MAP message, and convert the message to an email format and deliver it via the email gateway 24. The virtual mobile equipment 19 may maintain a database or lookup table relating virtual mobile numbers to IMSIs and to email addresses.

This arrangement allows the Future SMS Architecture to be used to provide a mapping between virtual mobile numbers and email addresses.

It may be further arranged that voice calls directed to one of these virtual numbers are directed to suitable voice equipment in the following manner. When a voice call is made from any network to one of the virtual numbers associated with network B, an ISUP voice call is routed in the normal manner to arrive at a gateway MSC in network B. This switch then makes an SRI (Send Routing Information) query to network B's HLR. However, due to the location updates done by the virtual mobile equipment in network A, a PRN (provide roaming number) request will be sent from the HLR to the SMS router 16 in network A. Network A's virtual mobile equipment 19 is operable to allow it to respond to such requests with the MSISDN or directory number of the suitable voice equipment such as the VSE 25, which is preferably in network A. Network A is then able to handle voice calls to these virtual numbers on behalf of network B, for example to provide announcements, or interactive voice services. Suitable voice equipment would be a voice services switch or an IVR (Interactive Voice Response) unit. Preferably the voice equipment is able to record messages from the caller and deliver them by email as an attachment to the email address that is associated with the virtual mobile number used by the caller, or optionally to route a call directly to a destination telephone number associated with the virtual mobile number dialled by the caller according to, for example, time of day or other criterion configured on the system.

Preferably the voice services equipment 25 is configured to record voice audio files in a widely used, compressed audio format such as GSM, so that it may be decompressed on a wide range of computer equipment running standard email client software. The compression of the audio yields benefits in storage space required for messages on email systems, and for efficient transmission between subsystems within the mobile and email networks.

Preferably the voice services equipment 25 is operable to accept via the email gateway, subject to normal security procedures, an audio file that is to be used as the audio prompt to be played to voice callers to the service. In this way, the organisation may update its audio prompt by simply sending an email containing the appropriate audio attachment.

Preferably the voice services equipment 25 is able to detect DTMF tones entered by the user, for example from his telephone keypad, and to convert these digits into an email message. The option of whether to make a voice recording, to collect digits, or to do both, may be specified by the service logic of the voice services equipment 25, and may for example be controlled wholly or in part by the dialled number or by using other criteria. The resultant information is then converted to email and sent to the associated email address. Advantageously, the email message format for sending received DTMF digits to the associated email address may be the same or similar format to that used for sending a received SMS message to the associated email address. This then permits combined processing of the messages from the two types of source.

Traditionally, virtual mobile implementations direct text messages via service providers attached to SMSCs. With the present architecture both voice and text messages may be directed preferably to the same destination, which might not be a service provider, but may be the end-customer or organisation. The voice services equipment 25 may optionally be configured to route calls through directly during certain hours or to record and email voice messages at other times, and these redirection options are preferably configurable by the end user.

The key advantage of the above example over the prior art is that connectivity is improved. Organisations may now publish just one contact number through which they may receive voice, DTMF and text message communications. With this technique, organisations that wish to receive text communication no longer need a dedicated connection to a mobile operator, for example by X.25 or TCP/IP that they would have to rent. Instead they can now opt to receive messages by email, and hence make use of the email facility that they probably already have at no additional cost. Furthermore the same medium can be used to receive recorded voice calls as file attachments. This has an advantage over traditional answering machine and call recording schemes in that the emailed file may be readily archived or forwarded using normal email handling techniques.

Preferably the organisation or individual whose email address is associated with the virtual mobile number is able to self-provision the email address, so as to have control of the set-up of the association without recourse to the network operator. This may be achieved by, for example, sending a text message to the virtual mobile number from a specific CLI, where the content of the text message conforms to a predefined syntax that specifies the email address. Alternatively a voice call could be used, with DTMF detection used to transmit a predefined character coding to specify the email address. Other methods are possible.

The network operator may wish to provide default email addresses for certain users in advance of those users possibly specifying their own chosen email addresses.

In a further example, concerning web mail, the Future SMS Architecture permits the mobile user to make a voice call in reply to a text message received from the web mail user, using the virtual mobile number that is the source of the text message as the destination number for the voice call. The call is routed using the virtual mobile number to the correct mobile network. The voice call is then directed to the VSE 25, which prompts the caller to record a message. The recording is preferably encoded in a compressed audio format such as GSM 6.1 for which de-compressors are commonly provided in popular computer operating systems. The VSE 25 then transmits the recorded file to the email gateway 24 that is part of the web mail subsystem, so that the file can be delivered to the user as an email attachment. The web mail subsystem then delivers it to the email account of the data network user.

Furthermore, if the web mail user has a suitably capable terminal, it is possible for the call to be routed over a data network to the terminal so that direct voice communication can be established. Also text replies sent to the web mail user could be arranged to 'pop up' on the recipient's terminal.

A 'threshold law' is recognised, which teaches that uptake of a new form of behaviour, in this case usage of a new service, is inversely proportional to the 'threshold' or degree of effort (either cognitive or physical) required on the part of the user for each and every use. The web mail method described above is a very simple and easy to use extension to the prior art that requires no additional effort on the part of the data network user. It therefore satisfies the threshold law for usage of a new service, in that the effort barrier to use is zero. No additional software is required on the data network user's terminal. The method also has the advantage that the voice file is available to be listened to again, kept, archived etc. using the management tools available on the user's terminal.

The combination of voice services and text services on the same number is a key aspect of the Future SMS Architecture, and supports the expected convergence between text and voice communication.

In a further aspect of the Future SMS Architecture, support is provided for various possible usages of alphanumeric addressing. The alphanumeric name may be carried in the message body, the destination address field or the originating address (CLI) field. The latter two are limited to 11 characters in GSM.

The Future SMS Architecture, when combined with either an internal or an external Network Name Server, solves the problem of lack of support for alphanumeric destination addresses in current telephone networks without requiring any changes in the handset. For example, it provides support for the use of alphanumeric destination addresses on mobile initiated messages, providing increased convenience and connectivity for users, thereby promoting traffic and revenue.

The Future SMS Architecture would also allow the standard Reply function of a mobile handset to work successfully for messages that have an alphanumeric origination address (GLI), without any changes being required in the handset. On reply, this address is used as the new destination address.

In order that alphanumeric addressing can be successfully adopted by a telephone network it is desirable that the translation of a wide range of alphanumeric strings is supported, and that the translation should be available to all of the network's customers, or to those who subscribe to a premium service. The translation may provide an equivalent MSISDN, email address or other address format in order to allow messages with such translated addresses to be delivered. The delivery method and message format may be determined by the format of the translated delivery address, or by other means.

In preferred embodiments of the Future SMS Architecture, text messages sent by subscribers to a network are routed to a text message routing apparatus that is capable of determining for each message whether the message contains an alphanumeric destination address, and if so, to query a Network Name Server in order to provide a routable address. The text message routing apparatus, in the case of GSM networks is preferably the SMS router 16.

A similar principle to Internet DNS, using Network Name Servers (NNS) is required to support the present technique, but with the following differences from DNS:
- Network Name Servers may have application to only the subscribers of a certain telephone network, or to a subset thereof.
- Network Name Servers may have regional boundaries to allow localised address translation.
- Network Name Servers are only used to translate the destination addresses of a subset of text messages sent from mobile telephones or SMS-capable terminals.
- Network Name Servers are only used to translate the destination addresses of text messages sent using the alphanumeric format.
- The translation may be performed from an Alphanumeric text message destination address into one of a number of possible alternative address formats, including but not limited to MSISDN telephone number and email address, whereas DNS only supports a single translation type.
- Alphanumeric destination addressing is a presently unused and unexploited aspect of mobile telephony and text messaging, and so the application of DNS-like techniques in this area is advantageous.

It is also possible that two or more networks, at least within a national domain, may wish to share their alphanumeric translation databases, but it is likely that individual networks would want to maintain their own.

This architecture provides unprecedented convenience for the user, in that whereas telephone numbers or email addresses are generally hard to remember and may not be known, people very easily remember names, for example the names or companies, brands or products. When a person is out of the office, away from home or simply away from other means of accessing a directory, then all that the person is likely to have with them is their mobile telephone. The following few examples illustrate how the present technique provides ease of use and a level of connectivity that was not possible before:
- The user realises that he has lost his Barclaycard (RTM). He does not have any telephone numbers to hand but he is able to send a text message to the address 'BARCLAYCARD' (RTM) to request assistance.
- While listening to the radio, the user is invited to submit a music request. The presenter may give out a fax or email address, or a telephone number, but these are hard to remember and inconvenient to write down. However the user is able to send a text message using the name of the radio station, which is well known to him, as an alphanumeric address.
- The user is in Lisbon and wishes to contact the local office of British Airways (RTM) to ask about flights. He does not have any local telephone numbers, and does not have the language skills to use a directory service. He sends a text message to the alpha address BA and obtains what he requires.

In an embodiment of the concept, a user sends a mobile or fixed originated text message to an alphanumeric address, for example Lufthansa (RTM), i.e. the destination address field in the message sending protocol is populated with the text 'Lufthansa' (RTM), and the address is marked as being in alphanumeric format. A maximum of 11 characters are normally allowable in GSM for such alpha addresses. No other destination information is required in the message apart from, in the case of GSM, the fixed service centre address that is provided by the handset configuration.

The message is then routed via the SMS router 16 (or equivalent processing module), which examines the destination address and determines that it is in alphanumeric format. The SMS router 16 then queries a Network Name Server (not shown) to obtain a translation. The returned translation may be an email address, in which case the message is delivered to the email gateway 24 for conversion to email format for onward delivery to the email address. Alternatively the translated address may be an MSISDN telephone number, in which case the SMS router 16 can proceed with normal delivery options for MSISDN addressed messages. Further, the translated address may be a network address reachable by one of a number of protocols, such as a network point code or global title for SS7, or an IP address for a destination on a data network, an SMS Host address on an X.25 data network or any other type of address.

SMS routers in multiple networks may be configured with the addresses of one or more Network Name Servers to use, and it would be possible for Network Name Servers to be arranged hierarchically for updating purposes to allow simplified updating in the same way that DNS servers are updated. However, in this application, it is preferable that Network Name Servers are localised to a network, or to a territory, because translations are likely to be in most cases only of national significance, not international, although naturally there will be exceptions to this. Networks may also wish to restrict service to their own premium customers.

In a preferred embodiment a provisioning system is provided to enable the operator to update and maintain the database, and to access its translation facilities. In an alternative embodiment, the system could be operated by multiple networks, each with its own provisioning interface.

In addition to being able to send mobile initiated messages with alphanumeric destination addresses to SMS Hosts, mobile networks using this technique could also offer users the option to adopt a personal alphanumeric identity as an alias for their MSISDN. These identities might need to be unique across the whole network, or unique within a closed user-group or community. Messages could then be sent to other users by using their alphanumeric address instead of a destination telephone number.

The Future SMS Architecture combined with a Network Name Server provides a new facility for telephone networks that allows its customers to contact a company or brand using the text-capable terminal that they carry or have at home. This provides an increase in connectivity and usability for telephone networks that has not been possible before. For the present technique, the usage threshold is extremely low, since the alphanumeric names to be used as addresses will for the most part be already known to the user. This provides ease of access to brand names, products and companies that was not possible before, because the threshold for seeking out an associated telephone number was too high. This barrier is removed by the use of alphanumeric addressing.

With reference to Figure 3, a further application example for the Future SMS Architecture may be operable to automatically provide textual airline information in response to queries sent by users using text messaging.

Currently these users would normally have to call the airline's information department using a voice call, and these assistance calls are very expensive for companies to provide. Furthermore the telephone number to call can be difficult to determine, especially if the mobile user is away from his office or home. The textual alternative service exemplified here requires no knowledge of telephone numbers or company locations, just the name of the company, brand or service to be contacted. In this example, mobile subscribers who have queries about an airline's arrival or departure times instead send a text message including the flight number, using the name of the airline (e.g. BA, Iberia, Alitalia) (RTMs) as the destination address, in order to receive a rapid response to their query.

The ease of use of a system that allows, for example, the text 'BA123' to be sent by text message to the address 'BA' to provide an immediate response with flight details and expected arrival time is highly advantageous.

In the above example the system operates as follows. The message is transmitted via the MSC 14 and via the SMS router 16. The SMS router 16 examines every message that passes through and checks the destination address for a match against a list of destination addresses stored in an attached database (not shown). This match process may be achieved using service logic and data internal to the SMS router 16, by using an attached external database, and/or by using external service logic such as a service control point (SCP), and/or by another means.

In this example the SMS router 16 matches the destination address 'BA', identifying the message as destined for a particular application associated with British Airways (RTM). In this example the application is resident on a third party server, and the SMS router 16 is operable to direct the message over a suitable interface (not shown) to the BA server. The Mobile Originated message is converted by the SMS router 16 to a form suitable for transmission to the BA server, for example using TCP/IP and possibly via a wide-area network, in such a way as to allow the server response to be transmitted back to the sender.

Upon reception of the message the BA server processes the message using textual rule matching or another technique, and derives either a response or a 'no match' condition. The operation of such textual engines is outside the scope of this description, which is primarily concerned with the means for routing queries and responses to and from such an engine. In the event of a match, the appropriate response is formulated into a message and returned to the SMS router 16. The address of the sender or other correlation means is included in the response to the SMS router 16. In the event of no match, a suitable error message may be sent to the user.

The response is then formulated into a Mobile Terminated message by the SMS router 16 and transmitted to the user. This retains the advantage of a single transit of the network by each message transaction.

A key enhancement to this technique, in the case where the message response is immediately reflected back to the sender, can avoid an HLR lookup for the response. In the case of Mobile Application Part Version 3 (MAP V3) in GSM, the IMSI of the sender is provided in the Mobile Originated message. There is therefore no need for the SMS router 16 to perform an HLR 28 lookup to deliver the reply, since the user is unlikely to have moved from the VMSC from which the message originated, and the IMSI is already known. With this information the SMS router 16 can construct the reply without reference to the HLR 28, unless the delivery fails in which case normal procedures would be used for a retry or delivery via the SMSC 13.

In another example, a user wishes to contact the Customer Services department of his telephone network operator to obtain an answer to a query regarding operation of the network, his handset or available services. It would be very convenient if the network operator implemented the present equipment, which would allow the subscriber to send a text message in order to receive a response directly from the network. An alpha address is preferred because it is easy to remember. For example the text strings HELP, NETWORK or TELCO could be used. The user enters his question, for example 'How do I turn on delivery reports?' as a text message, and sends the message to the alpha address HELP. The message is intercepted using techniques described herein, and the message is directed to the appropriate server for generation of a response.

It is clear that, with time, users' demands for access to information and data will only increase, and current experiences with pay television show that users are prepared to pay for access to services that benefit them. Alpha is a key factor in ease of use for access to information, and the present technique allows networks to provide intuitive and easy access to an increasing wealth of information services, and to derive revenue from their use.

The possibilities for types of information accessible by text messaging means are boundless, and many examples capitalise on the benefit of mobility when traditional sources of information are not normally available. A few examples include-
- Information sources such as weather or road congestion, e.g. send to the address 'WEATHER' or 'TRAFFIC'.
- Branded services such as promotional responses, competitions e.g. send to 'COCA COLA' or 'CRUNCHIE' (RTMs).
- Emergency assistance, e.g. text to 'BARCLAYCARD' (RTM) if you lose your credit card.
- Access to companies. e.g. text to 'AVIS' or 'HERTZ' (RTMs) to find nearest car rental depot.
- Access to encyclopaedic text engines or 'wizards' that are designed to process natural language questions and provide responses about any factual topic e.g. text to 'WIZARD'. Further details of such implementation are described in EP-A-1 185 119.
- Topic-based services aimed at school-children that encourage young people to use text, e.g. send question to 'CHEMISTRY', 'MATHS' or 'HISTORY'.

Alpha addressing can provide further benefits. An example would be contacting a company when the location of the company is unknown, or possibly abroad. In these circumstances, obtaining the telephone number can be quite time consuming. Contacting the airline 'LUFTHANSA' (RTM) is easy when the name can be used directly as a text address, whereas obtaining the phone number is less easy.

A further advantage of the invention is obtained by means of logging all attempts to access information. This allows the information provider(s) to be aware of the types of information that are being requested, and to dynamically update the information sources according to demand. This is a benefit that is not available to traditional publishers; once a book is sold, the publisher has no means of determining the success or failure of users' references to it. Furthermore the information accessible via the present equipment may be kept up to date and errors corrected, whereas traditional information sources begin to go out of date as soon as they are published.

Billing issues may be handled by the SMS router 16 if not already handled by the MSC 14. The SMS router 16 may generate billing records for post-pay customers, and may also interrogate and debit a pre-payment system before allowing access for prepay customers.

The invention could be implemented on platforms other than SMS routers, noting that maximum advantage is gained by recognising messages while still in the MO domain, and before any storage by the network.

Further advantageous aspects of the Future SMS Architecture are as follows.

Using the SMS Wizard technique, as described in EP-A-1 184 119, for selecting and routing certain messages to an intelligent text processing engine permits value added service enhancements. For example the SMS Wizard 22 can be used to interpret message content, perform transformations or signalling changes, and to forward the message to its destination in the normal way. This capability allows embedded commands to be placed in the message body text, typically at the start, which cause the message to be modified in a defined way. Two categories of examples are described.

In the first examples, messages are sent to normal destination numbers, but a special command code delimited by (for example) *# is inserted in the message-
* BLINK# at the start of the message causes the message to be modified according to the Enhanced Message Services specification such that the entire message blinks when received on a compatible handset.
* COPY# could cause the message to be duplicated to a pre-set destination which might be another mobile, an email address or the like.

In the second example, a message is sent to a well-defined and publicised short code, such as 555. A long number equivalent could also be available to permit overseas access from any network. In this example the addressing information for the message is contained (using ## delimiters for example) within the message body and is interpreted by the SMS Wizard 22.
#BRITISH AIRWAYS# (RTM) when sent to a short code e.g. 555, could cause the remainder of the message to be transmitted to a local BA office.

The latter method allows any user to make use of alpha addressing to contact an organisation, regardless of handset capability.

The Future SMS Architecture can also provide a solution to the limitation of message storage only being in the sender's network, preventing intelligent delivery services from being invoked when the recipient is unavailable. One solution has been proposed in WO-03/049461, but this involves intrusive signalling changes in the network. The Future SMS Architecture can provide a better solution.

Premium subscribers may be provided with an MSISDN number that is in a particular range of mobile numbers, and which becomes their public MSISDN. The network operates a special HLR function for this range of numbers. Accesses to this special HLR are treated differently from normal HLR accesses. The special HLR is able to maintain two locations for each subscriber. The first is his real location, as is maintained by a normal HLR, and the second is a virtual location which corresponds to equipment in the home network, for purposes such as voice recording, text archiving and the like, and then where appropriate is able to use the HLR for the subscriber's other number to onward deliver messages to the subscriber. This aspect of the technique is now described in more detail.

Premium subscribers are provided with an MSISDN from a special number range with its own special HLR function. The SIM card in the user's phone is replaced with a normal SIM card that has the MSISDN as its identity. When the user's handset performs a location update, the message passes to the special HLR. The real location information is stored by the special HLR.

When a user calls the subscriber, the Send Routing Information (SRI) query from an MSC in the called subscriber's network passes to the special HLR, which reports the location of the equipment, not the user's real location. The call then passes to the equipment for premium handling, e.g. recording, The equipment also makes an HLR query, which retrieves the real subscriber location. The call is onward routed normally to this location. Text messaging works in a similar way, with the SRI_SM query retrieving the address of the equipment in the home network, allowing any message sent to the premium subscriber to be routed via special processing in his home network. If necessary, an SRI_SM to the second number can be performed by the equipment for onward routing of a message to the subscriber. By maintaining this duality of location, and only divulging the real location to the network equipment, calls or text messages can be diverted via equipment operable to perform additional processing.

The duality of location can also be achieved by using two separate HLR locations, with separate MSISDNs, with the special HLR programmed to look up the second MSISDN from the first, and query the other HLR to obtain the real location. Location updates to the first MSISDN are passed to the other HLR in a similar way.

The ability to direct calls or messages via equipments in the home network opens the possibility of a wide range of value added services that were not possible before. It becomes possible to forward (i.e. divert) SMS messages to an alternative number, a desirable feature that is lacking from all current mobile networks. At present if one diverts a mobile number to an alternative number, voice calls are diverted as expected, but text messages continue to arrive at the original terminal. Other new service possibilities include archiving and copy. Archiving would allow a copy of every mobile originated (MO) message to be sent to an email account for example, allowing hard copy and storage on a PC. It would also be straightforward for the SMS router to additionally check CLI, allowing archiving of all mobile terminated (MT) messages sent to the user from other users of the same network. An SMS copy facility would allow messages received on one terminal to also be copied to another terminal, optionally based on CLI.

CLI white listing may also be used in conjunction with this method so that special processing of voice or text communications may be dependent on the identity of the originator.

A related application to this is where a special number is allocated to a subscriber but there is no handset. All communications to this number pass to the equipment in the home network, which may forward them to the subscriber over a data network, e.g. by email. This solution is particularly attractive for multimedia subscriptions, where penetration is low. By assigning these special numbers to friends or family, voice, text, picture and video communication is possible between a user with a multimedia handset and a user with no handset via the medium of the Internet or email.

This scheme is also attractive to roamers who may wish to pick up their messages via the Internet or by email, rather than pay heavy roaming charges while abroad.

It can be seen that the Future SMS Architecture provides a means for operators to reduce their costs, improve message delivery efficiency and flexibly introduce new services which themselves provide new revenue opportunities.

There now follows a more detailed description of the operation of an embodiment of an SMS Wizard using a programming environment known as TITLE (Telsis Integrated Text Language Environment), which is an improvement over that described in EP-A-1 185 119. Whereas EP-A-1 185 119 describes a pure pattern matching engine, the present technique provides an SMS Wizard structure that is a programming language and environment for defining text queries and responses. It is much more flexible and powerful and may be regarded as a second generation when compared to that disclosed EP-A-1 185 119.

TITLE provides a text processing environment that turns a server into an SMS Wizard that can accept and answer questions from mobile telephones in natural language format.

TITLE therefore provides a powerful tool for network operators who wish to reduce costs and improve service by offering customer care using SMS messaging, or who wish to build new revenue streams by cost effectively offering information and entertainment via SMS interaction. TITLE allows operators to offer improved service 24 hours a day, 7 days a week at low cost and with maximum flexibility.

In order to maximise user satisfaction and hence maximise cost savings and revenue growth, TITLE allows questions to be entered in natural language format. TITLE also has the flexibility to quickly implement a keyword, menu based system, or if required, to provide a powerful mix of natural language and menu based interaction.

TITLE can provide access to any form of information that is suitable for simple text interaction.

To use TITLE, it is not necessary to program in the conventional sense, instead it is only necessary to understand the structure of information and then define the required question formats and add the associated knowledge.

TITLE can either be used for evaluation and service development on a standalone workstation or it can be used in a network environment. In the latter case, as shown in Figures 1 and 3, the SMS Wizard 22 is connected to the SMS router(s) 16. Any services created on a standalone evaluation system can then be run on a network scale system.

If an operator's network has been upgraded to the Telsis Future SMS Architecture, then the SMS Wizard 22 can accept and respond to questions with the same network load as a single conventional message - providing tremendous scope for additional revenue generation.

In order to provide powerful text interaction, TITLE uses the following elements:
- Exceptions
- Answer Functions
- Wildcards
- Classes
- Knowledge Tables
- Gates

In order to simplify the process of understanding a question, the SMS Wizard pre-processes the input text. First, it removes all leading and trailing spaces from the text. Secondly, it makes all text lower case and replaces multiple spaces with single spaces. Finally it removes a trailing question mark, if present.

The resulting version of the input string is then compared with a list of pre-stored questions. The pre-stored questions are referred to as "Exceptions" as it is usual when processing languages to compare a signal with Exceptions before applying any rules, as it is a feature of human languages that common usage is not rule based.

Simple Exceptions therefore look exactly like the input questions, except for the preprocessing of the text. Therefore, within the demonstration system, there are often simple Exceptions such as:
hello
what is your name
i have a new address

Each Exception has an associated "Answer Function". The Answer Function may:
- reply directly to the user
- redirect to a Knowledge Table
- resubmit a modified question

Answer Functions can also include wildcards:

There are 100 wildcards in TITLE (v1), written {n} where n is a number in the range 1 to 100; some of these have special features and some are reserved. In TITLE (v1), {9} is used to hold the user's name. An example of how {9} is used is given below:

| **Exception** | **Answer Function** |
|---|---|
| my name is {9} | Hi {9}! |
| | I'll remember that |

A Class allows matching to be closely constrained, and a simple example would be ***country** where a member of this Class must be the name of a country. A simple example of an Exception using this Class would be:
{/|what is }{/the }capital of {1/*country}

This Class will, if the appropriate Knowledge Table is defined, answer questions of the form:
what is the capital of...
what is capital of ...
the capital of ...
capital of ...

This is a significant improvement over EP-A-1 185 119, which required that all of these syntax cases should be individually enumerated in the exceptions.

Knowledge Tables consist of a list of paired information, an Input and an Output. The Input is used to access the appropriate table entry and the Output provides either
(i) the required response
(ii) new text for resubmission
(iii) redirection information

TITLE incorporates loop counters to prevent infinite loops.

Gates are a mechanism for providing focus in a dialogue between a user and the SMS Wizard. At different points within a dialogue, a user's input may be identical (an example of this is when a user responds with either yes or no) and yet the SMS Wizard needs to keep track of the current position in the dialogue and respond to a user's input appropriately. TITLE allows a Topic to be defined at a given point, either by name or number. A Gate can then be used as the first item in an Exception and restrict the matching process to those Exceptions that have Gates containing the appropriate Topic.

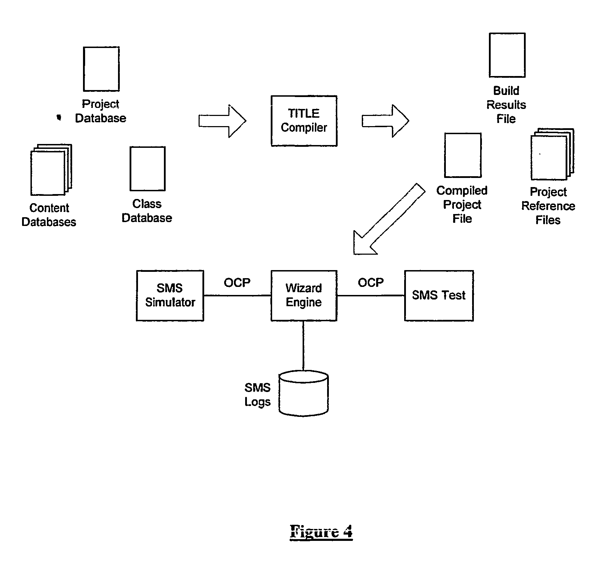

Figure 4 shows the elements involved in the development of a TITLE project. The purpose of each element is discussed below.

### Content Databases

Content databases contain TITLE Exceptions that define how the service will respond to input messages from users. Each content database contains an Exceptions table and a Knowledge table. Having several content databases in a project allows related Exceptions to be grouped together, and allows Exceptions to be kept with the Knowledge table they use.

### Class Database

The Class database contains all the user-defined Classes needed by the project. A Class is a set of alternative words or phrases that an Exception will allow at a particular point in a user input message. Each Class is stored in a different table in the Class database. The name of the table is the name of the Class.

### Project Database

The project database contains a Databases table and a Settings table. The Databases table lists all the content databases used by the project, giving their name, file location and Knowledge table ID. It also specifies the location of the Class database.

The settings table contains configuration settings for the project, such as the name of the compiled project file and the folder where the project reference files will be stored. For any setting that is not specified the TITLE Compiler uses the default value.

### TITLE Compiler

The TITLE compiler reads the project database, class database and content databases, and generates the compiled project file, build results file and project reference files. Compiler options are specified in the Settings table of the project database.

### Build Results File

After the TITLE compiler has been run, the build results file contains a summary of what happened during the build. If any errors occurred, the location and nature of each error will be given.

### Compiled Project File

The compiled project file is a binary file created by the TITLE compiler that contains all the details of the project. This file is loaded by SMS Wizard when it starts up and is retained in memory throughout the session. When the project is ready to be deployed to a live system, the compiled project file is transferred to a server PC.

### Project Reference Files

The project reference files contain most of the information in the compiled project file, in plain text form. These can be used with a third party differencing tool to compare two versions of a project. A single file contains the Exceptions from all the content databases, listed in the order that they will be tried when an input message is being matched. This can be helpful in understanding why a particular input message is not being matched by the expected exception.

### Wizard Engine

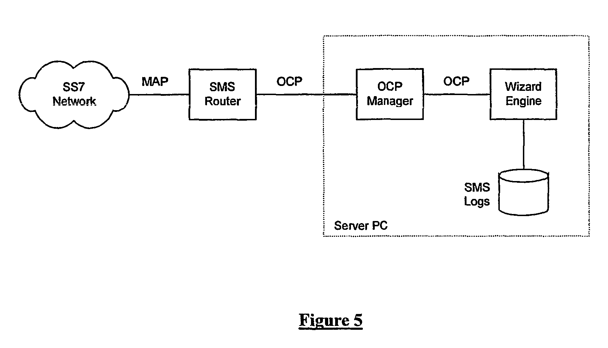

The Wizard Engine program is the main component of SMS Wizard. On a development PC it can receive input messages via from an SMS Simulator. On a live system the messages are received from an SMS router as shown in Figure 5.

### Wizard Syntax

A summary of the symbols used in the Exception syntax and the Answer Function syntax is given in the following table.

| Symbols | Meaning | Where used |
|---|---|---|
| I | End-of-exception marker. | Exception |
| I | Entry separator in inline classes. | Exception |
| I | Answer separator in decisions | Answer Function |
| ^ | Whitespace absorber | Exception |
| ^ | Resubmission | Answer Function |
| ^ [ ] | Redirection | Answer Function |
| ¦ | Punctuation-and-whitespace absorber | Exception |
| { } | Wildcard | Exception |
| { } | | Answer Function |
| / | Used in wildcards with class restrictions | Exception |
| / | Used in assignment and command statements | Answer Function |
| \ | Output modifier prefix | Answer Function |
| * | Class name prefix | Exception |
| [ ] | Focus prefix | Exception |
| [ ] | Root | Simple class |
| [ ] \| | Decision | Answer Function |
| [/=] | Simple assignment statement | Answer Function |
| [=] | Focus assignment statement | Answer Function |
| [/==] | Maths assignment statement | Answer Function |
| [/] | Command statement | Answer Function |

### DESIGNING A SERVICE

Service design should consider all aspects of the service. For example, this should include how the information is to be stored (so that it is easy to manage), different ways of asking similar questions (so that users get the answers they expect), and that thorough testing has been performed (so that online services always behave as expected).

When designing a new service the following steps should be taken:
- Decide on the information which will be provided by the new service.
- Choose the best way of providing the information for this service. This will often involve providing structured information in a knowledge table.
- Using the available information source, decide on the form of the response to the user, and hence choose suitable Answer Functions.
- Explore various ways that users could ask questions for this topic.
- If appropriate, define Class(es) which will make the Exceptions more specific, and also allow alternative Class entries.
- Convert the required questions into Exceptions.
- If appropriate, examine questions which will not be answered for the service, but could give responses which will guide users towards questions which can be answered. Convert these questions into Exceptions.
- Test that the Exceptions work as intended, and do not change existing functionality.

We will now explore the Country information service in the Examples to see how this service could have been designed.
1. *Decide on the information to be provided by TITLE.* In this case, all countries and most country attributes were chosen from the CIA World Factbook 2001. Questions about these country attributes for all countries would be provided by the service.
2. *Decide how to represent the information.* This information would use a Knowledge Table (called country), and the data within the Knowledge Table will be organised as Inputs of the form country/attribute, and with Outputs which can be directly sent to the user.

| **Input** | **Output** |
|---|---|
| spain/capital | Capital of Spain: |
| | Madrid |

*3. Choose the response to the user.* The responses which will be sent to the user will summarise the question and also provide the answer to the question. The question summary will be terminated by a colon and a new line, and followed by the answer.

| **Output** |
|---|
| Capital of Spain: |
| Madrid |

4. *Explore questions which users could ask* Examples could include:
what is the capital of spain
what's capital of spain
capital for spain
capital of spain

5. *Define any Classes which may be required to make Exceptions specific.* It is important that new Exceptions do not change any existing behaviour. This can usually be achieved using a class.
In this case, a country Class is required. This would not allow matches to questions such as:
what is the capital of Texas

This cannot be answered by the country knowledge table, because Texas is a U.S. state and not a country. It could also stop non-sense or obscure questions from matching, such as:
what is the capital of Letter

These difficulties can be overcome by using a country Class, with entries such as:
france
germany
spain

A Class can also allow country aliases, by placing entries in the Root (in square brackets):
uk[united kingdom]
united kingdom
uk and united kingdom are both Class entries, but with only one preferred Root form (United Kingdom). If the entry is identical to the Root, the Root may be omitted. The class entries must be in lower case, because the input string will be converted to lower case.
*6. Design the Exceptions.* Having investigated possible questions, and aliases; it should now be straightforward to design a number of Exceptions that include most of the possible questions. In some cases, these Exceptions may also allow additional questions. These questions are likely to be poorly constructed, but their meaning should be identical to the designed questions.
The following Exception contains details on the TITLE syntax.

| **Exception** | **Answer Function** |
|---|---|
| {/*whatis}^{/\|the }{1/*@country} | {/of \|for \|in ^[47]{12}/{11} |
| }{/\|the}{2/*country} | |

The Exception would allow a question such as:
what is capital in the Spain
which has very poor grammar, but the meaning is obvious.
*7.Provide Exceptions which won't be answered, but help the user towards topics which can be answered.* The example cannot answer questions such as:
president of France
latitude of Spain

However, it would be possible to catch these questions with an Exception such as:
{1} of {2/*country}
with an Answer Function
I don't know the {1} of {12}, but I do have country information for:
capital
population
GDP
area
climate
and many more

This does not answer the user's original question, but does provide information about questions which can be answered.

Further details of TITLE are available from "Research Note No. RN225-D 15 : TITLE : Telsis Integrated Text Language Environment", produced by Telsis Limited, a copy of which is filed with this International patent application.

In so far as the embodiment(s) of the invention described above may be implemented, at least in part, using software controlled processing apparatus, it will be appreciated that computer programs providing such software control and storage media by which such computer programs are stored are envisaged as aspects of the invention.

## Claims

1. Telecommunications services apparatus for use with a telephone network, the apparatus comprising:
means (16) for receiving mobile originated messages:
means operable to support execution of one or more messaging applications on the mobile originated messages, wherein an application may be executed for each of any or all messages that arrive at the apparatus;
means for storing message attributes matched to respective messaging applications;
means for comparing, for each message, an attribute of that message with the stored message attributes, and operable thereby to select the respective messaging application on the basis of the comparison; and
means (16,22) for executing the selected messaging application, execution of the selected application including processing, transforming and/or routing the respective message.

2. Apparatus according to claim 1, wherein the message attributes include destination address.

3. Apparatus according to claim 1 or claim 2, wherein the message attributes include destination address type.

4. Apparatus according to claim 1, claim 2 or claim 3, wherein the message attributes include originating address.

5. Apparatus according to any one of claims 1 to 4, wherein the message attributes include originating address type.

6. Apparatus according to any one of claims 1 to 5, wherein the message attributes include signalling fields.

7. Apparatus according to any one of claims 1 to 6, wherein the message attributes include message content.

8. Apparatus according to any one of claims 1 to 7, comprising at least one SMS router (16) for routing messages to the means operable to support execution of one or more messaging applications.

9. Apparatus according to claim 8, including an SMS service control point [SCP] (26) such that service logic may operate in the SMS router (16) in conjunction with centralised intelligence in the SMS SCP.

10. Apparatus according to any one of claims 1 to 9, comprising a message transformation means (22) for parsing, interpreting and transforming message content and addressing in order to generate a response message.

11. Apparatus according to claim 10, wherein the response message is generated according to a programmable table of exceptions.

12. Apparatus according to claim 10 or claim 11, as dependent on claim 8, wherein the response message is routed via the SMS router (16).

13. Apparatus according to claim 10, claim 11 or claim 12, wherein the response message is in mobile terminated form.

14. Apparatus according to claim 10 or claim 11, wherein the response message is routed over a data network.

15. Apparatus according to any one of claims 10 to 14, wherein the message transformation means (22) is operable to return a response message back to the original sender without requiring a routing query to a home location register (HLR), the response addressing and routing information being derived from the original message.

16. Apparatus according to claim 15, wherein the routing query is an SRI-SM MAP message.

17. Apparatus according to claim 15 or claim 16, wherein the routing information obtained from the original message is in the form of an international mobile subscriber identifier (IMSI) and a visitor location register (VLR) address corresponding to the sender's location.

18. A telecommunications services method for a telephone network, the method comprising:
receiving mobile originated messages;
supporting execution of one or more messaging applications on the mobile originated messages, wherein an application may be executed for each of any or all input messages;
storing message attributes matched to respective messaging applications;
comparing, for each message, an attribute of that message with the stored message attributes, and thereby selecting the respective messaging application on the basis of the comparison; and
executing the selected messaging application, execution of the selected application including processing, transforming and/or routing the respective message.

19. A method according to claim 18, wherein the message attributes include destination address.

20. A method according to claim 18 or claim 19, wherein the message attributes include destination address type.

21. A method according to claim 18, claim 19 or claim 20, wherein the message attributes include originating address.

22. A method according to any one of claims 18 to 21, wherein the message attributes include originating address type.

23. A method according to any one of claims 18 to 22, wherein the message attributes include signalling fields.

24. A method according to any one of claims 18 to 23, wherein the message attributes include message content.

25. A method according to any one of claims 18 to 24, including routing messages via at least one SMS router for execution of one or more messaging applications.

26. A method according to claim 25, wherein service logic may operate in the SMS router in conjunction with centralised intelligence in an SMS service control point (SCP).

27. A method according to any one of claims 18 to 26, comprising a message transformation step for parsing, interpreting and transforming message content and addressing in order to generate a response message.

28. A method according to claim 27, wherein the response message is generated according to a programmable table of exceptions.

29. A method according to claim 27 or claim 28, as dependent on claim 25, wherein the response message is routed via the SMS router.

30. A method according to claim 27, claim 28 or claim 29, wherein the response message is in mobile terminated form.

31. A method according to claim 27 or claim 28, wherein the response message is routed over a data network.

32. A method according to any one of claims 27 to 31, wherein the message transformation step is operable to return a response message back to the original sender without requiring a routing query to a home location register (HLR), the response addressing and routing information being derived from the original message.

33. A method according to claim 32, wherein the routing query is an SRI-SM MAP message.

34. A method according to claim 32 or claim 33, wherein the routing information obtained from the original message is in the form of an international mobile subscriber identifier (IMSI) and a visitor location register (VLR) address corresponding to the sender's location.

35. A computer program for implementing a method according to any one of claims 18 to 34.

36. A storage medium storing a computer program according to claim 35.

## Patentansprüche

1. Telekommunikationsdienstvorrichtung für die Verwendung in Verbindung mit einem Telefonnetzwerk, wobei die Vorrichtung aufweist:
eine Einrichtung (16) für das Empfangen von Nachrichten, die von einem Mobiltelefon stammen,
eine Einrichtung die betreibbar ist, um die Ausführung von ein oder mehreren Messaging-Anwendungen für die vom Mobiltelefon stammenden Nachrichten zu unterstützen, wobei eine Anwendung für irgendwelche oder alle Nachrichten, die bei der Vorrichtung ankommen, ausgeführt werden können,
eine Einrichtung für das Speichern von Nachrichtenattributen, die zu entsprechenden Messaging-Anwendungen passen,
eine Einrichtung für das Vergleichen für jede Nachricht eines Attributes dieser Nachricht mit den gespeicherten Nachrichtenattributen, und die betreibbar ist, um hierdurch die entsprechende Messaging-Anwendung auf Basis des Vergleichs auszuwählen,
eine Einrichtung (16,22) für das Ausführen der ausgewählten Messaging-Anwendung, wobei das Ausführen der ausgewählten Anwendung das Verarbeiten, Transformieren und/oder das Routing bzw. Weiterleiten der jeweiligen Nachricht beinhaltet.

2. Vorrichtung nach Anspruch 1, bei der die Nachrichtenattribute eine Zieladresse beinhalten.

3. Vorrichtung nach Anspruch 1 oder Anspruch 2, bei der die Nachrichtenattribute den Zieladresstyp beinhalten.

4. Vorrichtung nach Anspruch 1, Anspruch 2 oder Anspruch 3, bei denen die Nachrichtenattribute die Ursprungsadresse beinhalten.

5. Vorrichtung nach einem der Ansprüche 1 bis 4, bei dem die Nachrichtenattribute den Ursprungsadresstyp beinhalten.

6. Vorrichtung nach einem der Ansprüche 1 bis 5, bei der die Nachrichtenattribute die Signalisierungsfelder beinhalten.

7. Vorrichtung nach einem der Ansprüchen 1 bis 6, bei der die Nachrichtenattribute den Nachrichteninhalt beinhalten.

8. Vorrichtung nach einem der Ansprüchen 1 bis 7, die zumindest einen SMS Router (16) aufweist für das Routen von Nachrichten zu der Einrichtung, die betreibbar ist, um die Ausführung von ein oder mehren Messaging-Anwendungen zu unterstützen.

9. Vorrichtung nach Anspruch 8, die einen SMS Dienststeuerpunkt [SCP] (26) beinhaltet, so dass die Dienstlogik in den SMS Router (16) in Verbindung mit zentralisierter Intelligenz in dem SMS SCP bearbeiten kann.

10. Vorrichtung nach einem der Ansprüchen 1 bis 9, die einen Nachrichtentransformationseinrichtung (22) für das Parsing Interpreting und Transformieren vom Nachrichteninhalt und das Adressieren aufweist, um eine Antwortnachricht zu erzeugen.

11. Vorrichtung nach Anspruch 10, bei der die Antwortnachricht erzeugt wird gemäß einer programmierbaren Tabelle von Ausnahmen.

12. Vorrichtung nach Anspruch 10 oder Anspruch 11 soweit abhängig von Anspruch 8, bei der die Antwortnachricht über den SMS Router (16) geroutet bzw. geleitet wird.

13. Vorrichtung nach Anspruch 10, Anspruch 11 oder Anspruch 12, bei der die Antwortnachricht in einer am Mobiltelefon ankommenden Form vorliegt.

14. Vorrichtung nach Anspruch 10 oder Anspruch 11, bei der die Antwortnachricht über ein Datennetzwerk geleitet wird.

15. Vorrichtung nach einem der Ansprüche 10 bis 14, bei der die Nachrichtentransformationseinrichtung (22) betreibbar ist, um eine Antwortnachricht zurück zum ursprünglichen Sender zu senden ohne eine Routinganforderung an ein home location Register (HLR) zu erfordern, wobei die Antwortadress- und Routinginformation aus der ursprünglichen Nachricht abgeleitet wird.

16. Vorrichtung nach Anspruch 15, der die Routinganforderung eine SRI-SM MAP Nachricht ist.

17. Vorrichtung nach Anspruch 15 oder Anspruch 16, bei der die Routinginformation, die von der ursprünglichen Nachricht erhalten wird, in der Form eines internationalen Mobiltelefonteilnehmeridentifizierter (IMSI) und eines Besucherorstsregister (VLR) Adresse entsprechend des Ortes des Senders ist.

18. Telekommunikationsdiensteverfahren für ein Telefonnetzwerk, wobei das Verfahren aufweist:
Empfangen von Nachrichten, die von einem Mobiltelefon stammen
Unterstützen der Ausführung von einer- oder mehrere Messaging-Anwendungen auf den vom Mobiltelefon stammenden Nachrichten, wobei eine Anwendung für irgendwelche oder alle Eingangsnachrichten ausgeführt werden kann,
Speichern der Nachrichtenattribute, die zu entsprechenden Messaging-Anwendungen passen,
Vergleichen für jede Nachricht eines Attributes dieser Nachricht mit den gespeicherten Nachrichtenattributen und **dadurch** Auswählen der entsprechenden Messaging-Anwendungen auf Basis des Vergleichs, and
Ausführen der ausgewählten Messaging-Anwendung, Auswählen der ausgewählten Anwendung, die das Verarbeiten, Transformieren und/oder Routing bzw. Weiterleiten der entsprechenden Nachricht beinhaltet.

19. Verfahren nach Anspruch 18, bei dem die Nachrichtenattribute die Zieladresse beinhalten.

20. Verfahren nach Anspruch 18 oder Anspruch 19, bei dem die Nachrichtenattribute den Zieladressentyp beinhalten.

21. Verfahren nach Anspruch 18, Anspruch 19 oder Anspruch 20, bei dem die Nachrichtenattribute die Ursprungsadresse beinhalten.

22. Verfahren nach einem der Ansprüche 18 bis 21, bei dem die Nachrichtenattribute den Ursprungsadresstyp beinhalten.

23. Verfahren nach einem der Ansprüche 18 bis 22, bei dem die Nachrichtenattribute die Signalisierungsfelder beinhalten.

24. Verfahren nach einem der Ansprüche 18 bis 23, bei dem die Nachrichtenattribute den Nachrichteninhalt beinhalten.

25. Verfahren nach einem der Ansprüche 18 bis 24, einschließlich des Routens von Nachrichten über zumindest einen SMS-Router für das Ausführen von einer oder mehreren Messaging-Anwendungen.

26. Verfahren nach Anspruch 25, bei dem die Dienstelogik in dem SMS-Router in Verbindung mit zentralisierter Interliegens in einem SMS Dienststeuerpunkt (SCP) arbeiten kann.

27. Verfahren nach einem der Ansprüchen 18 bis 26, das einen Nachrichtentransformationsschritt für das Parsing, Interpretieren und Transformieren vom Nachrichteninhalt und das Adressieren aufweist, um eine Antwortnachricht zu erzeugen.

28. Verfahren nach Anspruch 27, bei dem die Antwortnachricht entsprechend einer programmierbaren Tabelle mit Ausnahmen erzeugt wird.

29. Verfahren nach Anspruch 27 oder Anspruch 28, soweit abhängig von Anspruch 25, wobei die Antwortnachricht über den SMS-Router geleitet wird.

30. Verfahren nach Anspruch 27, Anspruch 28 oder Anspruch 29, bei dem die Antwortnachricht in einer Form ist, die von einem Mobiltelefon empfangen wird.

31. Verfahren nach Anspruch 27 oder Anspruch 28, bei dem die Antwortnachricht über ein Datennetzwerk geleitet bzw. geroutet wird.

32. Verfahren nach einem der Ansprüchen 27 bis 31, bei dem der Nachrichtentransformationsschritt betreibbar ist, um eine Antwortnachricht zurück zum ursprünglichen Sender zu geben ohne eine Routinganfrage an das home location register (HLR) zu erfordern, wobei die Antwortadress- und Routinginformation aus der ursprünglichen Nachricht abgeleitet wird.

33. Verfahren nach Anspruch 32, bei dem die Routinganfrage eine SRI-SM MAP Nachricht ist.

34. Verfahren nach Anspruch 32 oder Anspruch 33, bei dem die Routinginformation, die von der ursprünglichen Nachricht erhalten wird, die Form eines internationalen Mobiltelefonteilnehmeridentifizierter (IMSI) und einer Besucherortregister (VLR) Adresse entsprechend dem Ort des Senders ist.

35. Computerprogramm für das Implementieren eines Verfahrens nach einem der Ansprüche 18 bis 34.

36. Speichermedium, das ein Computerprogramm gemäß Anspruch 35 speichert.

## Revendications

1. Appareil de services de télécommunications, destiné à être utilisé avec un réseau téléphonique, l'appareil comprenant:
un moyen (16) destiné à recevoir des messages provenant de mobiles ;
un moyen en mesure de supporter l'exécution d'une ou plusieurs applications de messagerie sur les messages provenant de mobiles, une application pouvant être exécutée pour chaque message, sur tout ou partie des messages qui arrivent à l'appareil ;
un moyen destiné à stocker des attributs de messages mis en correspondance avec des applications de messagerie respectives ;
un moyen destiné à comparer, pour chaque message, un attribut de ce message aux attributs stockés du message et en mesure de sélectionner ainsi l'application de messagerie respective sur la base de la comparaison ; et
un moyen (16, 22) destiné à exécuter l'application de messagerie sélectionnée, l'exécution de l'application sélectionnée comprenant le traitement, la transformation et/ou le routage du message respectif.

2. Appareil selon la revendication 1, dans lequel les attributs du message incluent l'adresse de destination.

3. Appareil selon la revendication 1 ou la revendication 2, dans lequel les attributs du message incluent le type d'adresse de destination.

4. Appareil selon la revendication 1, la revendication 2 ou la revendication 3, dans lequel les attributs du message incluent l'adresse d'origine.

5. Appareil selon l'une quelconque des revendications 1 à 4, dans lequel les attributs du message incluent le type d'adresse d'origine.

6. Appareil selon l'une quelconque des revendications 1 à 5, dans lequel les attributs du message incluent des champs de signalisation.

7. Appareil selon l'une quelconque des revendications 1 à 6, dans lequel les attributs du message incluent le contenu du message.

8. Appareil selon l'une quelconque des revendications 1 à 7, comprenant au moins un routeur de SMS (16), destiné à router des messages vers le moyen en mesure de supporter l'exécution d'une ou plusieurs applications de messagerie.

9. Appareil selon la revendication 8, comprenant un point de commande de service SMS [SCP, pour « *Service Control Point* »] (26) tel que la logique du service peut opérer dans le routeur SMS (16) en liaison avec l'intelligence centralisée du point SMS SCP.

10. Appareil selon l'une quelconque des revendications 1 à 9, comprenant un moyen de transformation de messages (22) destiné à analyser, interpréter et transformer le contenu du message et son adressage afin de produire un message de réponse.

11. Appareil selon la revendication 10, dans lequel le message de réponse est produit en fonction d'une table programmable d'exceptions.

12. Appareil selon la revendication 10 ou la revendication 11, lorsqu'elle dépend de la revendication 8, dans lequel le message de réponse est routé via le routeur SMS (16).

13. Appareil selon la revendication 10, la revendication 11 ou la revendication 12, dans lequel le message de réponse prend la forme d'un message aboutissant au mobile.

14. Appareil selon la revendication 10 ou la revendication 11, dans lequel le message de réponse est routé sur un réseau de données.

15. Appareil selon l'une quelconque des revendications 10 à 14, dans lequel le moyen de transformation de message (22) est en mesure de renvoyer un message de réponse à l'expéditeur original sans nécessiter une demande de routage adressée à un registre de localisation de rattachement (HLR, pour « *Home Location Register* »), les informations d'adressage et de routage de la réponse étant dérivées du message original.

16. Appareil selon la revendication 15, dans lequel la demande de routage est un message SRI-SM MAP.

17. Appareil selon la revendication 15 ou la revendication 16, dans lequel les informations de routage tirées du message original prennent la forme d'un identificateur international d'abonné mobile (IMSI, pour « *International Mobile Subscriber Identifier* ») et d'une adresse de registre de localisation de visiteurs (VLR, pour « *Visitor Location Register* ») correspondant à la position de l'expéditeur.

18. Procédé de services de télécommunications, pour un réseau téléphonique, le procédé comprenant les étapes consistant à :
recevoir des messages provenant de mobiles ;
supporter l'exécution d'une ou plusieurs applications de messagerie sur les messages provenant de mobiles, une application pouvant être exécutée pour chaque message, sur tout ou partie des messages entrants ;
stocker des attributs de messages mis en correspondance avec des applications de messagerie respectives ;
comparer, pour chaque message, un attribut de ce message aux attributs stockés du message et sélectionner ainsi l'application de messagerie respective sur la base de la comparaison ; et
exécuter l'application de messagerie sélectionnée, l'exécution de l'application sélectionnée comprenant le traitement, la transformation et/ou le routage du message respectif.

19. Procédé selon la revendication 18, dans lequel les attributs du message incluent l'adresse de destination.

20. Procédé selon la revendication 18 ou la revendication 19, dans lequel les attributs du message incluent le type d'adresse de destination.

21. Procédé selon la revendication 18, la revendication 19 ou la revendication 20, dans lequel les attributs du message incluent l'adresse d'origine.

22. Procédé selon l'une quelconque des revendications 18 à 21, dans lequel les attributs du message incluent le type d'adresse d'origine.

23. Procédé selon l'une quelconque des revendications 18 à 22, dans lequel les attributs du message incluent des champs de signalisation.

24. Procédé selon l'une quelconque des revendications 18 à 23, dans lequel les attributs du message incluent le contenu du message.

25. Procédé selon l'une quelconque des revendications 18 à 24, comprenant l'étape consistant à router des messages via au moins un routeur SMS, pour l'exécution d'une ou plusieurs applications de messagerie.

26. Procédé selon la revendication 25, dans lequel la logique de service peut opérer dans le routeur SMS en liaison avec l'intelligence centralisée, dans un point de commande de service SMS (SCP).

27. Procédé selon l'une quelconque des revendications 18 à 26, comprenant une étape de transformation de message destinée à analyser, interpréter et transformer le contenu du message et son adressage afin de produire un message de réponse.

28. Procédé selon la revendication 27, dans lequel le message de réponse est produit en fonction d'une table programmable d'exceptions.

29. Procédé selon la revendication 27 ou la revendication 28, lorsqu'elle dépend de la revendication 25, dans lequel le message de réponse est routé via le routeur SMS.

30. Procédé selon la revendication 27, la revendication 28 ou la revendication 29, dans lequel le message de réponse prend la forme d'un message aboutissant au mobile.

31. Procédé selon la revendication 27 ou la revendication 28, dans lequel le message de réponse est routé sur un réseau de données.

32. Procédé selon l'une quelconque des revendications 27 à 31, dans lequel l'étape de transformation de message est en mesure de renvoyer un message de réponse à l'expéditeur original sans nécessiter une demande de routage adressée à un registre de localisation de rattachement (HLR), les informations d'adressage et de routage de la réponse étant dérivées du message original.

33. Procédé selon la revendication 32, dans lequel la demande de routage est un message SRI-SM MAP.

34. Procédé selon la revendication 32 ou la revendication 33, dans lequel les informations de routage tirées du message original prennent la forme d'un identificateur international d'abonné mobile (IMSI) et d'une adresse de registre de localisation de visiteurs (VLR) correspondant à la position de l'expéditeur.

35. Programme d'ordinateur destiné à mettre en oeuvre un procédé selon l'une quelconque des revendications 18 à 34.

36. Support de stockage stockant un programme d'ordinateur selon la revendication 35.
